## Europäisches Patentamt

## European Patent Office

## Office européen des brevets

(11) Veröffentlichungsnummer: **0 082 913**
**B1**

(12) # EUROPÄISCHE PATENTSCHRIFT

(45) Veröffentlichungstag der Patentschrift:
20.05.87

(51) Int. Cl.⁴: **B 29 C 39/00**

(21) Anmeldenummer: **82100778.8**

(22) Anmeldetag: **04.02.82**

(54) **Verfahren und Vorrichtung zum Herstellen von im wesentlichen trockenen Formlingen aus aufgeschäumtem thermoplastischem Kunststoff, z.B. Polystyrol.**

(30) Priorität: **29.12.81 DE 3151775**

(43) Veröffentlichungstag der Anmeldung:
**06.07.83 Patentblatt 83/27**

(45) Bekanntmachung des Hinweises auf die Patenterteilung:
**20.05.87 Patentblatt 87/21**

(84) Benannte Vertragsstaaten:
**AT CH DE FR GB IT LI NL**

(56) Entgegenhaltungen:
**DE-A-2 940 815**
**DE-A-3 020 753**
**DE-B-2 237 397**
**FR-A-2 231 505**
**FR-A-2 302 844**
**GB-A-1 150 366**
**US-A-3 225 126**

(73) Patentinhaber: **Sodemape Holding AG, 122 Boulevard de la Petrusse, L-2330 Luxembourg (LU)**

(72) Erfinder: **Hahn, Ortwin, Prof. Dr.- Ing., Scherfeder Strasse 48, D-4790 Paderborn (DE)**

(74) Vertreter: **Hanewinkel, Lorenz, Dipl.- Phys., Patentanwalt Ferrariweg 17a, D-4790 Paderborn (DE)**

## Beschreibung

Die Erfindung bezieht sich auf eine Vorrichtung zum Herstellen von Formlingen aus aufgeschäumtem thermoplastischem Kunststoff, insbes. Polystyrol, in einer Form, vorzugsweise aus zwei Formteilwerkzeugen, die mit ihrer Formwand einen Formhohlraum umschließt, in den mindestens ein Füllinjektor zum Zuführen von Schäumgut einmündet, und beider zwei unabhängige Medienzu- und/oder -abfuhr-Anordnungen vorgesehen sind, von denen eine durch Düsen mit dem Formhohlraum verbunden ist und die andere als Medienkasten ausgebildet ist, der eine gute thermische Verbindung zum Formhohlraum besitzt, und welche Anordnungen an dem einen oder an beiden Formteilwerkzeugen angebracht sind.

Eine solche Formvorrichtung zum Herstellen von trockenen Formlingen aus expandierbarem Polystyrol (EPS) ist aus der DE-B 2 237 397 bekannt. Es ist eine Zweikammer-Vorrichtung für zwei Formhälften bekannt, mit der einerseits die Formwand im Bereich des Formhohlraumes beheizbar bzw. kühlbar ist, ohne daß das Formgut bzw. der Formling in direkten Kontakt mit dem Heiz- bzw. Kühlmedium kommt, und andererseits Dampf zum Formhohlraum separat zuführbar ist, um das eingefüllte vorexpandierte Formgut in die endgültige Gestalt aufzuschäumen. Diese bekannte Zweikammer-Vorrichtung sieht vergleichsweise große Kammern und verschiedene Leitungen für die einzelnen Anschlüsse zum Zuführen der Medien zum Heizen, Kühlen und Blähen vor. Nachteilig bei dieser bekannten Vorrichtung ist es, daß keine Formlinge komplizierter geometrischer Gestalt gefertigt werden können, da nach dieser Methode komplizierte Werkzeuge nicht herstellbar sind und mit guter Dauerfestigkeit und Dichtheit versehen werden können.

Aus FR-A- 2 231 505 ist eine Vorrichtung bekannt, bei der in der Heiz- oder Kühlkammer der Prozeßdampf getrennt von der formwand durch ein Rohrsystem geführt ist und mit vielen Verbindungen durch die Formwand und die darin befindlichen Düsen zum Formhohlraum verbunden ist. An diesen vielen Verbindungsstellen treten durch die Temperaturwechselbeanspruchung hohe Spannungen auf, die Undichtigkeiten hervorrufen können und dementsprechend eine sehr stabile, dicke aber dementsprechend thermisch träge Formwand erfordern. Außerdem ist der Fertigungs- und Installationsaufwand für das Rohrsystem relativ groß. Darüberhinaus besteht eine unerwünschte enge thermische Kopplung des Rohrsystems mit der Heiz- und Kühlkammer, so daß für die Prozeßführung Abhängigkeiten bestehen, die Verlustzeiten verursachen.

Aus FR-A- 2 302 844 ist eine Formvorrichtung bekannt, deren Formwand zweischalig aus dicht aufeinander passenden Formteilen hergestellt ist, zwischen denen ein Medienkanal eingefräst ist, der durch Düsen mit dem Formhohlraum verbunden ist. Die Herstellung der deckungsgleichen Formwandteile erfordert hohen fertigungstechnischen Aufwand, und die sich ergebende doppelte Wandstärke ergibt einen erhöhten thermischen Widerstand und erhöhte Wärmekapazität gegenüber einer einfachen Wand. Außerdem gibt sie eine relativ hohe thermische Koppelung des Medienkanals über die Formand zu der angrenzenden Dampfkammerfläche. Die unterschiedlichen Temperaturen der beiden Formwandteile während der wechselnden Medienbeaufschlagung führen zu wechselnder Fugenbildung zwischen den Teilen, so daß ein definierter Wärmedurchgang nicht gegeben ist und hohe lokale Differenzen des Wärmeübergangs und der Formwand-Temperaturen auftreten.

Aus US-A- 3 225 126 ist ein Formwerkzeug bekannt, dessen Formwände jeweils zweischalig mit zwischenliegenden Stützstegen ausgebildet sind. Zwischen den Schalen wird ein Heiz- bzw. Kühlmedium geführt. Angrenzend an eine der äußeren Schalen liegt ein Medienraum zur Zuführung von Prozeßdampf u.a., der durch die Stützstege mit Querbohrungen zum Formhohlraum verbunden ist. Diese Konstruktion erfordert eine hohe Präzision der Fertigung der ineinanderliegenden Schalen zur Erreichung einer Dichtigkeit im Bereich der Querbohrungen. Die Dichtigkeit ist bei unterschiedlicher Ausdehnung bei den auftretenden Temperaturunterschieden kaum zu gewährleisten. Es besteht eine starke unerwünschte thermische Koppelung zwischen dem Medienraum und dem Zwischenraum zwischen den Schalen durch die gesamte abgrenzende Schale.

Eine Steuervorrichtung, die die Medien- und Entsorungsventile abhängig von dem Erreichen bestimmter Temperaturen in der Medienversorgung zeitlich steuert, ist beschrieben.

In DE-A- 2940 815 ist eine Formvorrichtung und ein Verfahren zu dessen Betrieb beschrieben, bei dem die Medienzufuhr druckabhängig gesteuert wird. Weiterhin ist eine Abstandssteuerung mittels eines Abstandsmelders der beiden Teilformen vorgesehen, wobei nach dem Sintern zum Entlüften des Formlings vor der Entformung die Teilformen auf einen vorgegebenen Abstand auseinandergefahren und kurzzeitig wieder geschlossen werden.

Aufgabe der Erfindung ist es, eine Vorrichtung der eingangs genannten Art zu offenbaren, die in ihrer Bauweise wesentlich vereinfacht ist und sich durch wesentlich erhöhte Leistungsfähigkeit, durch beträchtlich schnelleres thermisches Ansprechen und größerer thermischer Unabhängigkeit der Medien und geringere Volumina in den Zuführungen bei erheblich verbesserter Betriebszuverlässigkeit auszeichnet.

Die Aufgabe wird gegenüber der Vorrichtung nach DE-A1-2 237 397 erfindungsgemäß dadurch gelöst, daß die mit dem Formhohlraum verbundenen Medienzu- und/oder -abfuhr-Anordnungen als mit Medienzu- und/oder -abführungen verbundene Medienkanäle ausgebildet sind, daß die Formwand dünnwandig und mit Rippen ausgebildet ist und daß die Medienkanäle längs in den Rippen werlaufen und durch winklig zueinander verlaufende Bohrungen gebildet werden, die endseitig durch Verschlüsse nach außen, zum Medienkasten und, soweit nicht durch Düsen bestückt, zum Formhohlraum abgedichtet sind.

Die thermische Versorgung der Form erfolgt über den an die Formwand anschließenden Medienkasten, und die Versorgung des Formhohlraumes mit Blähmittel, Druckluft, Vakuum usw. geschieht durch den Medienkanal in der Formwand. Auch kann bei bestimmten Strukturen des Formlings der Medienkasten oder der Medienkanal nur für ein Formteilwerkzeug vorgesehen werden.

Die Formwand ist mit Versteifungsrippen und sehr dünnen Verbindungswänden ausgestaltet. Dabei verlaufen die Bohrungen des Medienkanals in den Rippen beispielsweise stern- oder rasterförmig bis an die kritischen Formlingskanten und -spitzen. Die erwünschten Wirkungen entsprechend der Aufgabenstellung werden so erreicht; die Zykluszeiten des Prozesses werden herabgesetzt, und der Energiebedarf wird durch die kleinere Wärmekapazität der Formwände und deren geringeren thermischen Widerstand verringert.

Ein aus dem System austretender Anschluß kann je Formteil einen Verteiler bzw. Ventilblock tragen zur Einleitung von Preßluft, Vakuum, Dampf sowie Heiz- oder Kühlmedium in das System. Die getrennten Ventile bzw. Absperrorgane sind wahlweise und unabhängig voneinander zu öffnen und zu schließen und gestatten in beliebiger Reihenfolge die Medienführung getrennt.

Die unabhängige Medienführung im Kanal ist für alle Formteile gewährleistet und kann in beliebiger Reihenfolge der Prozeßführung angepaßt werden.

Die erfindungsgemäße Vorrichtung ermöglicht insbesondere die überschnittene Prozeßführung, bei der beispielsweise bereits im vorgeheizten Zustand oder auch während des Heizens die Form befüllt wird, da kein Dampf und keine Feuchtigkeit in den Formhohlraum dringt. Sie gestattet auch, den in der Form befindlichen Überdruck während des Füllvorganges abzubauen, ohne daß die Formtemperatur dabei beeinträchtigt wird oder der Heizvorgang unterbrochen werden muß.

Die geringe thermische Trägheit der Formwand und deren geringer thermischer Widerstand und außerdem das sehr geringe Volumen des Medienkanals und die geringe thermische Kopplung der Anordnungen erlaubt sowohl eine schnelle als auch wesentlich genauere und einfachere Prozeßführung, da kaum Totzeiten auftreten, die berücksichtigt werden müssen.

Ein weiterer Vorteil der Erfindung besteht in der Möglichkeit, beiden Formteilen unabhängig voneinander verschiedene Medien, sowohl den Medienkästen als auch den Medienkanälen, zuzuführen und die einzelen Medien getrennt nach Menge und Temperatur zu steuern und dadurch besonders kritische Formpunkte in der Temperatur zu beeinflussen.

Da die Medien in den beiden Anordnungen prozeßtechnisch weitgehend unabhängig geführt werden können, eignet sich die Vorrichtung nach der Erfindung besonders für einen durch Rückmelder gesteuerten Prozeßablauf. Zu dessen Durchführung werden vor den Zuführungen der Medien Drosselventile und Druckmelder und an den Austritten Temperaturmelder angebracht, deren Ausgangssignale zur Prozeßsteuerung dienen.

Der Abschluß des Blähprozesses wird durch den Anstieg des Druckes bei verminderter Durchströmung gesteuert. Das Auswerfen durch Druckluft wird bei Druckabfall beendet. Das Heizen wird durch Temperaturabfall am Medienaustritt beendet. Die Zuführung des Formgutes und das Öffnen und Schließen der Form werden ebenfalls bei bestimmten Temperaturen oder Drücken durchgeführt.

Störungen im Betrieb durch schlechtes Schließen der Form, falsche Temperaturen der Medien oder ungeeignetes Formgut werden durch eine Zeitüberwachung der Prozeßschritte automatisch ermittelt und signalisiert. Somit ergeben sich optimale Prozeßzeiten bei erhöhter Zuverlässigkeit und gleichmäßig optimale Produkteigenschaften.

Eine weitere Ausgestaltung der Vorrichtung und der Prozeßführung besteht darin, daß die Formteilwerkzeuge mit einem Abstandsmelder ausgerüstet werden, mit dessen Ausgangssignal vorteilhaft der Schließvorgang der Form so gesteuert wird, daß der Formhohlraum ein erhöhtes Volumen hat, solange der Füll- und Blähvorgang dauert. Daran anschließend wird durch weiteres Hochheizen und Schließen der Form auf das Endvolumen der Formling, insbes. an der Oberfläche, hoch verdichtet. Dieser zusätzliche Verdichtungsprozeß stellt einen vorteilhaften Verfahrensschritt dar. Die Vorrichtung mit getrennten Anordnungen zur Medienführung und zwar mit solcher von geringer thermischer Trägheit, ist besonders deshalb dafür geeignet, da die Oberfläche der Formwand schnell und selektiv aufgeheizt werden kann, ohne daß der gesamte Formling durchgeheizt ist, so daß sich im wesentlichen die Oberfläche des Formlings, ggf. in bestimmten Bereichen, verdichtet. Dies führt zu neuen vorteilhaften bisher unerreichten Eigenschaften des Formlings. Weiterhin sind die Rippen in der Formwand besonders geeignet, den erhöhten Druck aufzunehmen.

Ein Ausführungsbeispiel der Erfindung wird im folgenden anhand der Zeichnungen näher erläutert. Es zeigen:

Fig. 1 einen Schnitt durch die zweiteilige Form;

Fig. 2 einen Schnitt durch die zweiteilige Form mit den in Rippen verlaufenden Medienkanälen und

Fig. 3 Gesamtanordnung.

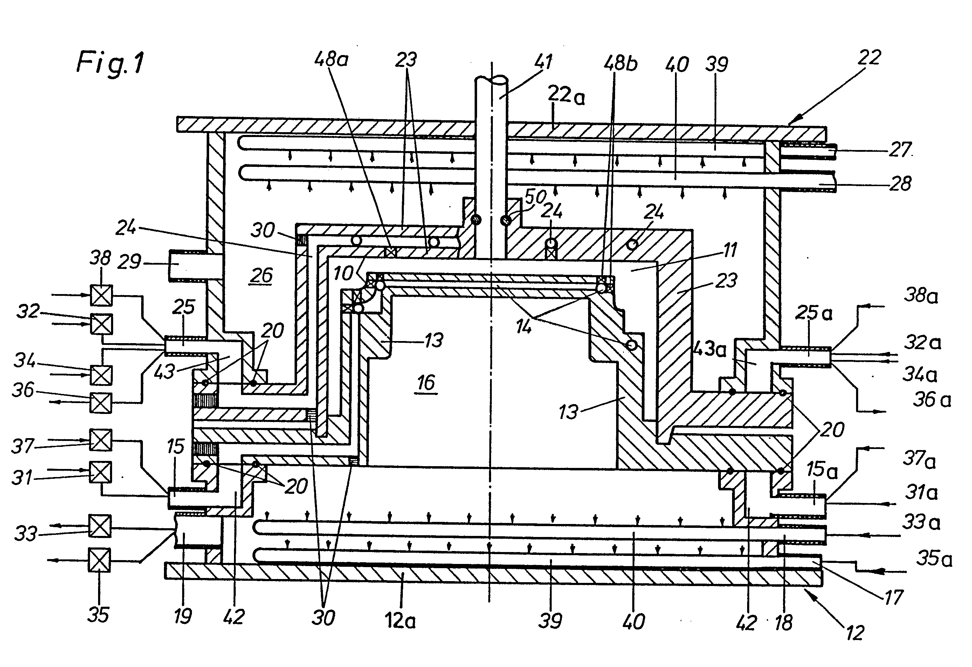

Im Beispiel der Figur 1 ist die Vorrichtung zweiteilig, nämlich mit einem unteren Formteilwerkzeug 12 und einem oberen Formteilwerkzeug 22 ausgebildet. Beide Formteilwerkzeuge 12 und 22 bilden mit ihrer eigentlichen Formwand 13 bzw. 25 das Formnest 10, indem diess Formwände 13 und 23 den Formhohlraum 11 dicht umschließen. Die Trennflächen zwischen den beiden Formwänden 13 und 23 weisen in Umfangsrichtung einen Absatz bzw. eine Nut auf, so daß beide Formwände 13, 23 in Axialrichtung und Radialrichtung zueinander fixiert sind.

Das obere Formteilwerkzeug 22 bildet einen Medienkasten 26 zwischen der Abschlußwand 22a und der Formwand 23. In dem Medienkasten 26 (Dampfkammer) ist Öffnung 27 für den Zutritt von einem Heizmedium und eine Öffnung 28 für den Zutritt eines Kühlmediums und eine Kondensataustrittsöffnung 29 angebracht.

In der Abschlußwand 22a befinden sich Anschlüsse 25, 25a, die über Verbindungskanäle 43, 43a mit dem Medienkanal 24 in der Formwand 23 über Dichtungen 20 dicht verbunden sind, für die Zuführung von Dampf bzw. sonstigem Schäummedium über ein Ventil 32, Preßluft über ein Ventil 34, Vakuum über ein Ventil 36 und Lösungsmitteldampf über ein Ventil 38.

Der auf diesem Wege zuzuführende Dampf dient vorwiegend zum Aufschäumen und Versintern des Füllgutes. Die Preßluft kann für die unmittelbare Kühlung des Formlings und das Entformen desselben verwendet werden. Das Vakuum kann zu einer Zwangsentlüftung des Formnestes 10 während des Füllvorganges nützlich sein. Weitere Medien, z. B. $CO_2$, Stickstoff oder organische Lösungsmitteldämpfe, können sowohl für unmittelbare Kühlung des Formlings als auch für eine spezielle Beeinflussung des Versinterungsprozesses sowie für eine spezielle Oberflächenhärtung des teilweise oder vollständig ausgeschäumten Formlings dienen.

In entsprechender Weise ist im unteren Formteilwerkzeug 12 die Formwand 13 auf einem Medienkasten 16 befestigt, dessen Heiz- und Kühlmitteleintritt 17, 18 auf einer Seite angeordnet und deren Kondensat bzw. Kühlmittelaustritt 19 auf der anderen Seite vorgesehen ist. In beiden Medienkästen 16, 26 sind Vorrichtungen 39 und 40 zur energiesparenden Verteilung der Heiz- und Kühlmedien angebracht. Das obere Formteilwerkzeug 22 weist ferner integriert in den Medienkasten 26 einen Füllinjektor 41 auf, durch den vorexpandiertes Schaumgut in den Formhohlraum 11 zugeführt werden kann. Der Füllinjektor 41 kann gleichzeitig auch als Auswerfer ausgelegt sein.

In der Formwand 23 des oberen Formteilwerkzeuges 22 ist ein Kanalsystem 24 integriert, das gegenüber den Heiz- und Kühlmedien, die über die Zuführungen 27 und 28 in den Medienkasten 26 und über die Verteilervorrichtungen 39 und 40 in den Kasten 26 gelangen, mediendicht isoliert ist. Der in der Formwand 23 verlaufende Medienkanal 24 ist über die Trennfläche zwischen der Formwand 23 und dem Medienkasten 26 über Verbindungskanäle 43, 43a mit den Anschlüssen 25, 25a verbunden.

Der in die Formwand 23 integrierte Medienkanal 24 ist kreuzweise in Form von Bohrungen ausgebildet. Die Enden dieser Bohrungen sind durch pfropfenartige Verschlüsse 30 abgeschlossen. Nach dem Formhohlraum 11 hin ist der Medienkanal 24 mit Düsen 48a versehen, über die das Medium aus dem Medienkanal 24 in den Formhohlraum 11 zwecks Erwärmung, Versinterung, Kühlung, Härtung oder Entformung des Füllgutes bzw. des Formlings gelangt.

Beim unteren Formteilwerkzeug 12 ist ein vergleichbarer Medienkanal 14 einschließlich Düsen 48b in der Formwand 13 ausgebildet.

Für den Fall, daß nur ein Formteilwerkzeug einen Medienkanal enthalten braucht, wird er bevorzugt in dem Formteilwerkzeug eingebracht, in dem sich der Medienkanal fertigungstechnisch einfacher integrieren läßt.

Es ist bei besonderen Strukturen des Formlings zweckmäßig, den Medienkanal 14 im unteren Formteilwerkzeug 12 unterschiedlich zum Medienkanal 24 des oberen Formteilwerkzeuges 21 auszubilden, und bei dem einen Formteilwerkzeug den Medienkanal über die Düsen 48e mit dem Formhohlraum 11 zu verbinden und im anderen Formteilwerkzeug 12 keine Düsen einzusetzen, sondern durch endseitige Verschlüsse der Bohrungen einen geschlossenen Medienkanal auszubilden.

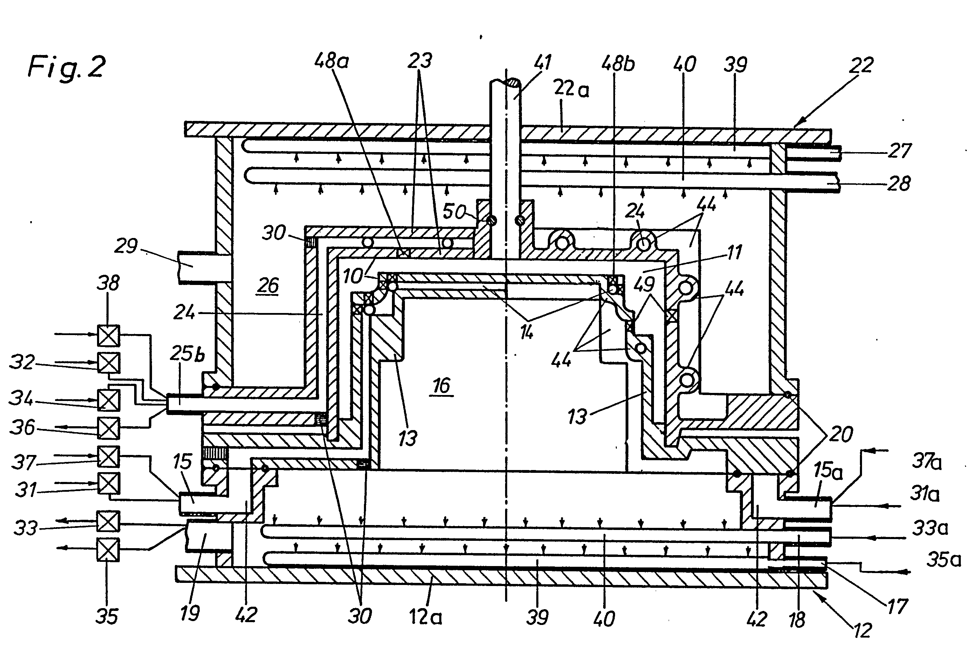

Figur 2 zeigt, daß die Formwände 13 und 23 dünn ausgebildet und im Bereich der den Medienkanal 14 bzw. 24 bildenden Bohrungen mit rückwärtigen, rippenförmigen Vorsprüngen 44 verstärkt sind. Die Rippen 44 sind kreuzweise und vertikal insbesondere über die kritischen Eckpunkte der Form geführt. Besonders dort sind die Medienkanale 14, 24 mit Dusen 48a, b bestückt, um die Befüllung und das Auswerfen zu erleichtern. Die Rippen bewirken zusätzlich eine gunstige Versteifung der Formwand 13, 23 in den Eckpunkten oder Kanten, trotz geringen Materialverbrauchs für das Gußteil. Durch die geringe Wandstärke der Formwand 13, 23 findet ein schneller Temperaturausgleich statt, der das Auftreten von thermischen Spannungen in der Formwand herabsetzt und das Auftreten von Spannungerissen, insbesondere durch die ständige thermische Wechselbeanspruchung, verhindert.

In Fig. 2 ist außerdem der Anschluß 25b für Medienzu- oder -abführung direkt in die Formwand 23 geführt. Damit entfällt die Notwendigkeit einer zusstzlichen Abdichtung nach außen bzw. zum Medienkasten 26. Selbstverständlich kann ein komplementarer, direkt in die Formwand 23 führender Anschluß auch auf der gegenüberliegenden Seite des Formteilwerkzeuges 22 angebracht werden, falls dies erforderlich ist.

Im Betrieb wird durch den Füllinjektor 41 vorexpandiertes Schäumgut, beispielsweise Polystyrol in Granulatform, in den Formhohlraum 11 der bereits vorgeheizten Formteilwerkzeuge 12 und 22 eingebracht, wobei die Injektorluft über die Düsen 48a,b die Medienkanäle 14 bzw. 24 und das geöffnete Ventil 36 evakuiert wird. Während dieser Betriebsphase ist das Preßluftventil 34, das Ventil 32 fur das Schäummedium sowie das Ventil 38 für ein weiteres in den Formhohlraum einzubringendes Prozeßmedium geschlossen. Entsprechendes gilt für das untere Formteilwerkzeug 12 und ggf. die Anschlüsse mit den entsprechenden Bezugszeichen mit Index a.

Bei der Füllung des Formhohlraumes 11 mit Füllgut ist das Entweichen der Injektorluft über den Restspalt durch entsprechende Gestaltung der Trennflächen oder durch nicht vollständiges Schließen des Formhohlraumes 11 beim Ineinanderfahren der beiden Formteilwerkzeuge 12 und 22 während des Füllens möglich. Nach Beendigung des Schäumvorganges werden die Ventile 31 und 32 für die Schäummedienzuführung geschlossen und für eine eventuell erwünschte Oberflächenhärtung die Ventile 37 und 38 für die Zuführung geeigneter beispielsweise leicht anlösender Medien in den Formhohlraum 11 geöffnet. Die Abkühlung der Formwände 13, 23 kann durch Beendigung der Heizmediumzufuhr durch Anschlüsse 17 und 27 sowie Beginn der Kühlmediumzuführungen über Anschlüsse 18 und 26 bereits vor Abschluß des eigentlichen Schäumvorganges bzw der Oberflächenhärtung oder auch bei Beendigung derselben eingeleitet werden. Die Abkühlung des Formlings kann nach Beendigung des Schäumvorganges und der Oberflächenhartung und Schließen der zugehörigen Ventile der jeweiligen Medienzuführungen und durch anschließende Öffnung des Ventils zur Zuführung eines gasförmigen Kühlmediums unmittelbar an die Oberfläche des Formlings, und zwar über eines oder beide Medienkanäle 14, 24 und die Düsen 48a, b unterstutzt und beschleunigt werden.

Sobald der Formling die für seine Formstabilität notwendige Entformungstemperatur erreicht hat wird die Kühlung der Formwände 13, 23 und die eventuell verwendete unmittelbare Kühlung des Formlings durch Sperren der Ventile der Kühlmedienzuführungen beendet und die Entformung des Formlings durch Auseinanderfahren der Formteilwerkzeuge 12 und 22 vorgenommen. Dies kann durch über einen oder beide Medienkanäle 14, 24 zugeführte Druckluft oder durch mechanische Auswerfer unterstützt werden.

Nach Beendigung der Kühlung durch Beendigung der Kühlmedienzufuhr kann unmittelbar wieder mit dem Heizen der Formwände 13, 23 begonnen werden. Dies geschieht bereits während des Entformungsvorganges so daß die Formwände nach erneutem Schließen des Formhohlraumes 11 zum Füllen des Formhohlraumes 11 bereits wieder auf Schaumtemperatur und vor allen Dingen auch frei von Feuchtigkeit sind, wodurch der Füllvorgang wesentlich erleichtert und beschleunigt wird.

Insbesondere bei der Herstellung dünnwandiger Formlinge kann auch mit unterschiedlichen Temperaturen in den einzelnen Formwanden 13, 23 gefahren werden wodurch sich insbesondere in Bezug auf den Kühlvorgang noch weitere Zeitersparnisse erzielen lassen.

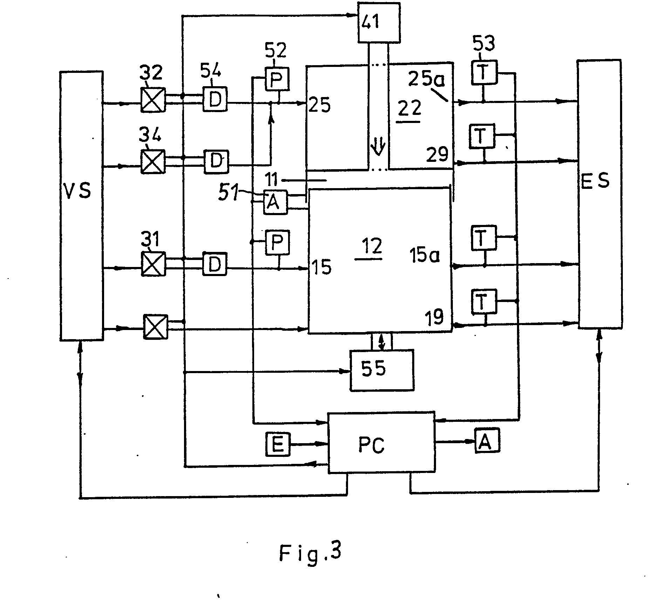

Fig 3 zeigt eine Übersicht über eine Gesamtvorrichtung zur Durchführung der Prozeßsteuerung nach dem Verfahren. Die Formteilwerkzeuge 12, 22 sind mit der Medienversorgungseinrichtung VS u a. über Schaltventile 31, 32, 34 und mit diesen in Reihe geschaltete Drosselventile 54 mit den Anschlüssen 15, 25 verbunden. Die Anschlusse 15a, 25a, 19 und 29 sind mit der Entsorgungseinrichtung ES verbunden. Hinter den Drosselventilen sind Druckmelder 52 angeschlossen, die jeweils ein Signal entsprechend der Druckhöhe oder bei einer jeweils vorgegebenen Druckhöhe abgeben, das der Prozeßsteuereinrichtung PC zugeführt wird. An den Anschlüssen zur Entsorgung sind Temperaturmelder 53 angeschlossen die jeweils ein Signal entsprechend der Temperatur oder bei Überschreiten oder Unterschreiten jeweils bestimmter Temperaturen abgeben das ebenfalls der Prozeßsteuereinrichtung PC zugeführt wird

Der Abstand der beiden Formteilwerkzeuge wird von einem Abstandemelder 51 der Prozeßsteuereinrichtung PC signalisiert. Von einer Eingabe E werden der Prozeßsteuervorrichtung PC weitere Signale als Vorgeben für den Prozeß zugeführt, z. B. Druck- oder Temperaturschwellwerte Abstandswert und Maximalzeiten für Prozeßschritte.

Die Prozeßsteuervorrichtung PC hat Steuerausgänge die z.B die Schaltventile 31, 32, 34 evtl. die Drosselventile 54 den Injektor 41 und den Formschließmotor 55 ein- und ausschalten oder steuern.

Zusätzlich ist die Ver- und Entsorgungseinrichtung zur Steuerung und Überwachung an die Prozeßsteuervorrichtung PC angeschlossen.

Der Grad der Aufheizung oder Abkühlung der Formwand wird über die austretenden Medien ermittelt und daraus die Weiterschaltung des Prozesses gesteuert. Der Grad der Vernetzung des Formgutes wird durch den Druckmelder an der Medienzuführung ermittelt da der Druckabfall an der Form im Vergleich zum Druckabfall am Drosselventil zunimmt. Bei einem jeweils vorgegebenen Druck wird der nächste Prozeßschritt eingeleitet.

Durch den Abstandsmelder der z. B. durch Endschalter gebildet sein kann kann die Form

0 082 913

verschieden stark dem Meldesignal gemäß mit dem Schließmotor 55 zusammengepreßt werden.

Die Dauer der einzelnen Prozeßschritte ergibt sich somit aus dem tatsächlichen Zeitbedarf für das Erreichen der gewünschten Funktion auch wenn die in den Prozeß eingeführten Medien und das Formgut mit Toleranzen in den prozeßrelevanten Daten zugeführt werden. Eine Überwachung von vorgegebenen Grenzwerten der Toleranzen wird durch eine Grenzzeitüberwachung der einzelnen Prozeßschritte vorgenommen. Bei Überschreitungen wird dies durch eine Alarmvorrichtung A von der Prozeßsteuervorrichtung signalisiert Der Steuerungsablauf ist außerdem weitgehend unabhängig von den jeweils eingesetzten Formwänden die die Gestalt des Formlings bestimmen. Die Umstellung ist somit vereinfacht.

Weiterhin ist es vorteilhaft abhängig von den Zeiten der einzelnen Prozeßschritte die Vorgaben für die Regelung des Versorgungs- und oder Entsorgungssystems z. B. durch Erhöhung oder Erniedrigung der Medientemperetur zu setzen. Dies führt zu einer weiteren Prozeßzeitverkürzung bei gleichzeitiger Erreichung optimaler Betriebsbedingungen zur Qualitätssteigerung.

Die dargestellte Ausführungsform ist nur beispielhaft und kann z. B. durch Zusammenfassung der Schalt- und Dosierventile, Verlagerung der Ventile und Druckmelder zum Ausgang der Formanschlüsse und entsprechende Anpassung an die Verwendung weiterer Medien im Rahmen der Erfindung verändert werden.

Die in der Beschreibung dargestellten Prozeßarten: die Zuführung von Härtungsmitteln, das Nachheizen und Nachdrücken, sowie die Rückwirkung der Steuerung auf die Ver- und Entsorgungseinrichtung können jeweils für sich als auch in beliebiger Kombination mit gesteigertem Effekt eingesetzt werden.

Praktische Versuche haben ergeben daß Formteile die in einer Vorrichtung nach der Erfindung nach dem Verfahren nach der Erfindung hergestellt worden sind nur 5 bis 10 Gewichtsprozente Feuchtigkeit enthalten im Gegensatz zu konventionell hergestellten Teilen die üblich 25 bis 30% Feuchtigkeit enthalten Ein Trockungsprozeß kann deshalb entfallen was erhebliche Kostenersparnis für die Herstellung mit sich bringt.

Der Füllinjektor 41 und entsprechend angeordnete Auswerfer sind von Dichtungen 50 umgeben die den Formhohlraum 11 gegen den Medienkasten 26 abdichten (Fig.1).

**Patentansprüche**

1. Vorrichtung zum Herstellen von Formlingen aus aufgeschäumtem thermoplastischem Kunststoff, insbesondere Polystyrol, in einer Form, vorzugsweise aus zwei Formteilwerkzeugen (12, 22), die mit ihrer Formwand (13, 23) einen Formhohlraum (11) umschließt, in den mindestens ein Füllinjektor (41) zum Zuführen von Schäumgut einmündet; und bei der zwei unabhängige Medienzu- und/oder -abfuhr-Anordnungen (16, 26; 14, 24) vorgesehen sind, von denen eine durch Düsen (45a, b; 49) mit dem Formhohlraum (11) verbunden ist und die andere als Medienkasten ausgebildet ist, der eine gute thermische Verbindung zum Formhohlraum (11) besitzt, und welche Anordnungen (16; 26; 14; 24) an dem einen oder an beiden Formteilwerkzeugen (12, 22) angebracht sind, dadurch gekennzeichnet, daß die mit dem Formhohlraum verbundenen Medienzu- und/oder -abfuhr-Anordnungen als mit Medienzu- und/oder -abführungen verbundene Medienkanäle (14, 24) ausgebildet sind, daß die Formwand (13, 23) dünnwandig und mit Rippen (44) ausgebildet ist und daß die Medienkanäle (14, 24) längs in den Rippen (44) verlaufen und durch winklig zueinander verlaufende Bohrungen gebildet werden, die endseitig durch Verschlüsse (30) nach außen, zum Medienkasten (16, 26) und, soweit nicht durch Düsen (45a, 45b) bestückt, zum Formhohlraum (11) abgedichtet sind.

2. Vorrichtung nach Anspruch 1, dadurch gekennzeichnet, daß die Medienkanäle (14, 24) über zeitlich steuerbare Ventile (31, 31a; 32, 32a; 34, 34a; 36 bis 38a) an Medien zum Blähen, z.B. Dampf, zum Auswerfen, z.B. Druckluft, zum Härten, z.B. Lösungsmitteldampf, und zum Entlüften, z.B. Vakuum, angeschlossen sind und daß mit den Ventilen (31, 32, 34) Drosselventile (54) in Reihe geschaltet sind und jeweils zwischen den Drosselventilen (54) und den Medienkanälen (14, 24) ein Druckmelder (52) angeschlossen ist, dessen Ausgangssignalleitung auf eine Prozeßsteuervorrichtung (PC) geführt ist und an den Medienkanälen (14, 24) jeweils Anschlüsse (15a, 19, 25a, 29) zur Entsorgung (ES) führen, an denen jeweils ein Temperaturmelder (53) angeschlossen ist, dessen Signalleitung auf die Prozeßsteuervorrichtung (PC) geführt ist, die über Ausgangssignalleitungen mit den Ventilen (31, 32, 34), einem Injektor (41), einer Öffnungs- und Schließvorrichtung (55) der Formteilwerkzeuge (12, 22), der Ver- und Entsorgungseinrichtung (VS, ES) sowie eingangsseitig mit einer Eingabevorrichtung (E) und vorzugsweise ausgangsseitig mit einer Alarmvorrichtung (A) verbunden ist.

3. Vorrichtung nach Anspruch 2, dadurch gekennzeichnet, dazwischen den Formteilwerkzeugen (22, 12) ein Abstandmelder (51) angeordnet ist, dessen Ausgangssignalleitung auf die Prozeßsteuervorrichtung (PC) geführt ist.

4. Verfahren zur Verwendung der Vorrichtung nach Anspruch 2 oder 3, bei dem die Prozeßsteuervorrichtung (PC) durch Steuersignale abhängig von den Ausgangssignalen der Druckmelder (54), der Temperaturmelder und der Abstandsmelder (51) jeweils zugehörige Ventile (31, 32, 34; 35a, 33a) schließt bzw. öffnet bzw. die Öffnungs- und Schließvorrichtung (55) bzw. den Injektor (41) betätigt, derart, daß die Prozeßsteuervorrichtung (PC) die Zeitdauer der jeweiligen Prozeßschritte bis zur Meldung eines bestimmten Druckes bzw. einer bestimmten Temperatur mit Minimal- und Maximalzeitvorgaben vergleicht und bei Unter- bzw. Überschreitung der Zeitvorgaben Vorgabesignale für die Regelung der Ver- und Entsorgungseinrichtung (VS, ES) zur Erhöhung bzw. Erniedrigung der Medientemperaturen stufenweise erhöht bzw. erniedrigt.

5. Verfahren nach Anspruch 4, dadurch gekennzeichnet, daß die Prozeßsteuervorrichtung (PC) die Zeitdauer der jeweiligen Prozeßschritte bis zur Meldung eines bestimmten Druckes, einer bestimmten Temperatur eines bestimmten Abstandes der Formteilwerkzeuge (12, 22) mit Minimal- und Maximalzeitvorgaben vergleicht und bei Unter- bzw. Überschreitung der Zeitvorgaben ein Signal auf die Alarmvorrichtung (A) ausgibt.

6. Verfahren nach Anspruch 4, dadurch gekennzeichnet, daß die Prozeßsteuervorrichtung (PC) die Öffnungs- und Schließvorrichtung (55) derart steuert, daß zu Prozeßbeginn die Formteilwerkzeuge (12, 22) auf einen solchen Abstand eingestellt sind, daß der Formhohlraum (11) ca. 10 bis 25% größer ist als bei völlig geschlossener Form, und daß bei einem bestimmten Fortschritt des Sinterprozesses, der durch den Druckmelder (54) signalisiert wird, die Formteilwerkzeuge (12, 22) völlig geschlossen sind und gleichzeitig ein Ventil zur Zuführung eines Heizmediums erhöhter Temperatur geöffnet ist bis der Temperaturmelder (53) im zugehörigen Entsorgungsanschluß das Erreichen einer bestimmten Temperatur, z.B. 140°C meldet.

7. Verfahren nach Anspruch 6, dadurch gekennzeichnet, daß, bevor die Form endgültig geschlossen wird, ein Ventil zur Zuführung von einem Härtungsmedium, z.B. organischem Lösungsmitteldampf, zum Formhohlraum (11) kurzzeitig geöffnet ist.

**Claims**

1. Apparatus for the manufacutre of articles of expanded thermoplastics material, especially polystyrene, in a mould consisting preferably of two component moulding tools (12, 22) which with their mould wall (13, 23) enclose a mould cavity (11), into which at least one filling injector (41) for the supply of foam material descharges, and which is providing two independent agent supply and/or removal arrangements (16, 26; 14, 24), one of which is connected to the mould cavity (11) through nozzles (48a, b; 49) and the other being an agent chest possessing a good thermal connection to the mould cavity (11), the arrangements (16, 26; 14, 24) being attached to one or both component moulding tools (12, 22), characterized by the fact that the said arrangements which are connected to the mould cavity (11) are agent channels (14, 24) being connected to an agent supply and/or removal device, and further that the mould wall (13, 23) is structured thin-walled and with ribs (44) and that the agent channels (14, 24) run longitudinally in the ribs (44) and are formed by drillings running at an angel to one another, the ends of which are sealed by seals (30) outwardly against the agent chest (16, 26), and against the mould cavity (11) in so far as they are not fitted with nozzles (48a, 48b).

2. Apparatus according to claim 1, characterized by that the agent channels (14, 24) are connected through time-controlled valves (31, 31a; 32, 32a; 34, 34a; 36 to 38a) to agents for the inflation, e. g. steam, for the ejection, e. g. compressed air, for the curing, e.g. solvent vapour, and for the removal of air, e.g. vacuum, and further that said valves (31, 32, 34) are connected in series with throttle valves (54) and that in each case between the throttle valves (54) and the agent channels (14, 24) a pressure sensor (52) is connected, the output signal lead of which is led to a process-control device (PC), and further that from the agent channels (14, 24) in each case connections (15a, 19, 25a, 29) are leading to the removal device (ES) each being equipped with a temperature sensor (53), the output signal lead of which is led to the process-control device (PC), and further that output signal leads from said process-control device (PC) are connected to the valves (31, 32, 34), to the filling injector (41), to an opening and closing device (55) of the component moulding tools (12, 22) to the supply and removal device, and preferably to an alarm device (A), and further input signal leads from said process-control device (PC) are connected to an input device (E).

3. Apparatus according to claim 2, characterized in that a distance sensor (51) is mounted between the component moulding tools (22, 12), output signal leads of which are led to the process-control device (PC).

4. Method for the application of the apparatus according to claim 2 or 3, providing that the process-control device (PC), as a result of control signals dependent on the output signals of the pressure sensors (54), the temperature sensors and the distance sensors (51), opens respectively shuts in each case associated valves (31, 32, 34; 35a, 33a) respectively the opening and closing device (55) respectively actualtes the filling injector (41), characterized in that the process-control device (PC) compares the time duration of the particular process steps, until the signalling of a specific pressure respectively a specific temperature, with minimum and maximum time specifications and, in the event of the time specifications being exceeded or dropped below, raises or lowers stepwise specified signals for the control of the supply and removal devices (VS, ES) for raising respectively lowering of the agent temperatures given.

5. Method according to claim 4, characterized in that the process-control device (PC) compares the time duration of the particular process steps, until the signalling of a specific pressure, a specific temperature or a specific distance of the component moulding tools (12, 22), with minimum and maximum time specifications and issues a signal to the alarm device (A) in the event of the time specification being exceeded or dropped below.

6. Method according to claim 4, characterized in that the process-control device (PC) controls the opening and closing device (55) in such a way that at the start of the process the component moulding tools (12, 22) are adjusted to such a distance that the mould cavity (11) is approx. 10 to 25 % greater than for the fully closed mould, and that at a specific point of progress of the sintering process, which is signalled e. g. by the pressure sensor (54), the component moulding tools (12, 22) are fully closed, and that, preferably simultaneously, a valve for the supply of a heating agent at a high temperature is opened until e. g. the temperature detector (53) in the associated evacuation connection signals the attainment of a specific temperature, e.g. 140°C.

7. Method according to claim 6, characterized in that, before the mould is finally closed, a valve for the supply of a curing agent, e.g. organic solvent vapour, to the mould cavity (11) is briefly opened.

**Revendications**

1. Dispositif pour la fabrication de pièces formées en matière artificielle thermoplastique moussée, tout particulièrement de polystyrol, dans un moule composé de préférence de deux outils de formage (12, 22) entourant de leur paroi de moule (13, 23) un creux de moule (11), dans lequel aboutit au moins un injecteur de remplissage (41) assurant l'alimentation en matière moussée; ce creux de moule est ceint de deux installations d'amenée et/ou d'évacuation de médias (16, 26; 14, 24) indépendantes, dont l'une est reliée au creux de moule (11) par des buses (48a, b; 49), tandis que l'autre possède une excellente liaison thermique par rapport au creux de moule (11), ces installations (16, 26; 14, 24) étant montées à l'un ou, le cas échéant, aux deux outils de formage (12, 22); dispositif caractérisé par le fait que les installations d'amenée et/ou d'évacuation de médias, reliées au creux de moule, consistent en canaux de médias (14, 24), raccordés à l'entrée et/ou à la sortie de médias, et par le fait que la paroi de moule (13, 23) est fine et pourvue de nervures (44), et que les canaux de médias (14, 24) s'étendent longitudinalement dans ces nervures (44), ces canaux étant formés par des forures, disposées angulairement les unes vers les autres et pourvues à leur extrémité de fermetures (30) assurant l'étanchéité vers l'extérieur, par rapport au coffre de médias (16, 26) et - à moins d'installation de buses (48a, 48b) - au creux de moule (11).

2. Dispositif selon spécification 1, caractérisé par le fait que les canaux de médias (14, 24) sont raccordés aux médias d'expansion, p.ex. vapeur, d'éjection, p.ex. air comprimé, de durcissement, p.ex. vapeur de solvants, et d'aération, p.ex. vacuum, par l'intermédiaire de soupapes réglables dans le temps (31, 31a; 32, 32a; 34, 34a; 36 à 38a), et que les soupapes d'étranglement (54) sont connectées en série par les soupapes (31, 32, 34) et qu'entre chaque soupape d'étranglement 54 et les canaux de médias (14, 24) un signalisateur de pression (52) est connecté, signalisateur de pression dont la ligne de signaux est conduite sur le dispositif de commande du déroulement des opérations (PC), lequel est relié aux soupapes (31, 32, 34), à un injecteur (41), un dispositif d'ouverture et de fermeture (55) des outils de formage (12, 22) à l'installation d'alimentation et d'évacuation (VS, ES) de même que, côté entrée, à un dispositif d'introduction (E) et, de préférence, côté sortie, à un dispositif d'alarme (A), ceci par l'intermédiaire de fils de signaux de sortie.

3. Dispositif selon spécification 2, caractérisé par le fait qu'un avertisseur d'intervalle (51) est disposé entre les outils de formage (22, 12), avertisseur dont les fils de signaux de sortie sont conduits au dispositif de commande du déroulement des opérations (PC).

4. Procédé pour l'utilisation du dispositif selon spécification 2 ou 3, procédé selon lequel le dispositif de commande du déroulement des opérations (PC), en fonction des signaux de sortie de l'avertisseur de pression (54), ferme ou ouvre, selon le cas, les soupapes correspondantes (31, 32, 34; 35a, 33a), respectivement: actionne le dispositif d'ouverture et de fermeture (55) ou l'injecteur (41), de sorte que le dispositif de commande du déroulement des opérations (PC) compare la durée de chacun des pas du processus avec des temps alloués minimum et maximum jusqu'à signalisation d'une certaine pression ou d'une certaine température et, en cas de souspassement ou dépassement des temps alloués, modifie les signaux réglant l'installation d'alimentation et d'évacuation (VS, ES) graduellement en vue d'accroître ou de réduire les températures de médias.

5. Procédé selon spécification 4, caractérisé par le fait que le dispositif de commande du déroulement des opérations (PC) compare la durée de chacun des pas du processus avec des temps alloués minimum et maximum, jusqu'à la signalisation d'une certaine pression, d'une certaine température, d'un certain intervalle des outils de formage (12, 22) et transmet un signal au dispositif d'alarme (A) lorsque les temps alloués sont souspassés ou dépassés.

6. Procédé selon la spécification 4, caractérisé par le fait que le dispositif de commande du déroulement des opérations (PC) actionne le dispositif d'ouverture et de fermeture (55) de sorte que, lors du démarrage du processus, les outils de formage (12, 22) se trouvent réglés à un intervalle tel que le creux de moule (11) présente une taille supérieure d'environ 10 à 25 % à celle du moule complètement fermé et que, lors d'une progression déterminée du processus de frittage, signalée par l'avertisseur de pression (54), les outils de formage (12, 22) se ferment complètement tandis qu'une soupape s'ouvre simultanément en vue de l'alimentation en média de chauffage de température surélevée jusqu'à ce que l'avertisseur de température (53) signale, dans le raccord d'évacuation correspondant, qu'une certaine température, p.ex. 140°C, est atteinte.

7. Procédé selon spécification 6, caractérisé par le fait qu'avant la fermeture définitive du moule, une soupape d'admission d'un agent de durcissement, p.ex. vapeur de solvant organique, dans le creux de moule (11) est brièvement ouverte.

Fig.1

Fig. 2

0 082 913

Fig.3